# EUROPEAN PATENT APPLICATION

(11) **EP 4 538 674 A1**
(43) Date of publication of application: **16.04.2025**
(21) Application number: 23202668.2
(22) Date of filing: 10.10.2023
(51) Int. Cl.: G01N 3/04, G01N 3/08

(54) **APPARATUS AND METHOD FOR APPLYING MULTIAXIAL DISPLACEMENT TO A SHEET-SHAPED SPECIMEN**

(71) Applicant: Österreichische Akademie der Wissenschaften, 1010 Wien (AT)
(72) Inventor: Pegritz, Michael, 8700 Leoben (AT); Kreiml, Patrice, 8700 Leoben (AT); Cordill, Megan J., 8700 Leoben (AT)
(74) Representative: Patentanwaltskanzlei Matschnig & Forsthuber OG

(57) **Abstract**

A system (1) and method for applying displacement to a sheet-shaped specimen (11) in at least two directions comprises a base frame (2), which includes a plurality of gripping devices (4), each of which is displaceable along a radial direction around a center space while holding one end of the sample mounted in the center space. A cam disk device (3) has a generally annular shape surrounding the center space and is rotatable in a plane parallel to the base frame plane so as to determine the radial position of the gripping devices (4). Coupling elements (41) of the gripping devices abut to corresponding portions of the outward circumferential rim (30) of the cam disk device, whose radius is varying as a function of the circumferential coordinate. Thus, the radial position of the gripping devices is defined by the varying radius of the circumferential rim, and rotating the cam disk device exerts a defined displacement, in particular strain, upon the specimen (11) clamped between the gripping devices (4).

## Description

### Field of the Invention

The invention relates to a system and method for applying displacement (or strain) to a sheet-shaped specimen in at least two directions. The invention also relates to a cam disk device that is adapted for use in such a displacement applying system and method.

Applying multiaxial displacement, and in particular biaxial strain, to samples, also called "biaxial loading" is an important approach for measuring material properties. In many applications, structural materials are not only subjected to uniaxial loading (loading in one direction), but in multiple directions. This is even more critical for functional thin films, and in particular in flexible electronics, wearable electronics, and foil materials used in space and satellite applications, and many other applications in various technical fields. Herein, the term "sheet" (or "foil") is understood as denoting a specimen having a thickness considerably smaller than its lateral extension (e.g. by at least one order of magnitude), and in particular having a thickness less than one millimeter and preferably less than 200 µm. This also includes specimens including a coating or thin film deposited onto a support sheet.

### Background

Biaxial devices for applying biaxial loading to a sample are well-known, even though their realization may be cumbersome. Often the size, gripping, method of loading, and sample alignment hinder the widespread use of biaxial loading/straining in small or confined areas, such as under an optical microscope or inside a scanning electron microscope (operates in vacuum). Existing biaxial devices make it difficult to perform testing with additional measurement techniques (for thermal and/or electrical properties of a sample) that are important to learn more about the functional behavior and reliability of the tested materials. One aspect is gripping of a sample, and gripping of four arms of a sample reliably and in perfect alignment is challenging. Thus, four grips connected to four separate motors have been designed for biaxial straining, but such a layout is poor in ensuring that the strain is applied simultaneously equi-biaxial (the same amount in all four arms/directions). The small motors necessary for conventional layouts of biaxial devices are generally expensive. Motors can use too much space that is not available inside or under all microscopes. Another typical issue often encountered is that the design of the grips themselves causes slipping of the samples, and thus inhomogeneous loading.

For instance, the article of A. Hannon & P. Ternan, J. Mat. Processing Tech. 198 (2008) 1-13, discloses a biaxial tensile tester which uses four hydraulic actuators, one at each arm; for keeping the sample in a stationary state, an additional pantograph-type link mechanism is applied. Further setups for applying multi-axial strain and shear, which implement different mechanical systems for controlling and equalizing displacement along two axes, are described in US 8,082,802, US 6247370, US 2018/0238784A1, and US 7,204,150. All these mechanisms are complex, difficult to handle and maintain, and tend to be unwieldy.

It is an object of the invention to provide a system and a method which enables equi-biaxial loading with superior gripping and sample alignment capabilities in a compact form. This should also allow for in-situ testing, which means that the sample (i.e., a sheet to be examined or tested) is kept in the displacement-applying system in a defined state of displacement (in particular, defined strain state) while the sample is held in the system and subjected to further examination or testing, such as to document any changes to the sample (i.e. cracking, deformation, electrical resistance, etc.) via microscopes of any kind (optical light microscopy, atomic force microscopy, scanning electron microscopy) or diffraction methods (e.g., X-ray diffraction). Additionally, the ability to take the invention to a variety of microscopes and other testing environments is desired. Different loading ratios and simple changes to the sample geometry are further desired since this allows for a very large range of testing strategies and in-situ characterization methods.

### Summary of the Invention

To achieve this object, one aspect of the invention relates to a system for applying strain, or more generally displacement, to a (thin) sheet-shaped specimen in at least one or two directions, which comprises a base frame and a cam disk device which is mountable to the base frame; the base frame includes a plurality of gripping devices moveably attached thereto and arranged in a generally circular arrangement oriented parallel to a base plane of the base frame and surrounding a center space, wherein the plurality of gripping devices are movable radially with respect to a conceptual center location within the center space and are configured to clamp said specimen located within the center space and exert a (defined, simultaneous) displacement on the specimen; the cam disk device has a planar, generally circular shape comprising a loading opening at a center thereof, said cam disk device comprising a circumferential rim whose radius as measured with respect to said center is varying as a function of the circumferential coordinate around said center in at least a plurality of portions of the circumferential rim; the cam disk device is, in a state mounted to the base frame, supported rotatable in a plane parallel to the base plane around the center location; and each gripping device includes a respective coupling element configured to abut a corresponding portion of the circumferential rim of the cam disk device, when the latter is mounted to the base frame, such that the gripping device is radially coupled to the radius of the circumferential rim portion at the location of the respective coupling element.

The solution according to the invention achieves the above-stated object in an efficient, reliable, and cost-efficient manner. In contrast to conventional biaxial loading devices, the device according to the invention is compact and offers an optimized gripping design. This allows extremely good alignment and simultaneous equi-biaxial or uniaxial (one-directional displacement) loading. Thus, the invention offers a compact and simple way to apply biaxial, in particular equi-biaxial, strain to a sample, which can be used for a variety of in-situ measurement and characterization methods, including microscope setups or diffractometers (i.e. X-rays). The application of displacement (and in particular, strain) can be applied manually or with a motor for a desired value of strain of up to a maximal strain (of e.g. 10% or more, depending on the respective setup), as well as with different loading ratios along the two axis of displacement. Thus, the invention provides a versatile testing method with an optimized gripping and alignment system that allows for additional testing environments (vacuum, thermal, electrical).

This is in contrast to conventional loading systems where a plurality of step motors or like displacement actuators is used to displace the ends of the sample; thus, the invention overcomes the problem of having the non-simultaneous motion of multiple displacement actuators in proper alignment by providing a unique component, namely the cam disk device.

Thus, another aspect of the invention relates to a cam disk device, configured to being used in a displacement applying system. Such a cam disk device according to the invention has a planar, generally circular shape comprising a loading opening at a center thereof, said cam disk device comprising a circumferential rim whose radius as measured with respect to said center is varying as a function of the circumferential coordinate around said center in at least a plurality of portions of the circumferential rim.

In advantageous embodiments of the cam disk device, the loading opening of the cam disk device is realized as a central hole pervading the cam disk device. The loading opening will, when mounted in the displacement applying system and viewed along the center axis, generally contain or surround the center space of the system. Furthermore, the cam disk device may have the overall shape of a ring, and then is also referred to as loading ring. The cam disk device or loading ring may advantageously comprise a planar support surface located within the circumferential rim, the planar support surface being configured to cooperate with a matching support surface of the displacement applying system in which the cam disk device is to be mounted rotatable within the plane of the support surface about the loading opening.

Further advantageous embodiments and developments of the displacement applying system are as follows and may be freely combined wherever this appears suitable. For instance, the base frame of the displacement applying system may comprise a central window at the center space, which central window would correspond with the central hole of the cam disk device when the latter is mounted to the base frame. This imparts the advantage of having only the sample within the center space, and offering free access to the sample from either side, in particular along the center axis, for different measuring or monitoring instruments, such as a camera and/or microscope and/or the transmission of X-rays.

In many suitable embodiments, the gripping devices may be realized in opposing pairs, for instance as two pairs of gripping devices. The gripping devices of each pair will preferably be located at opposite positions with respect to the center space, and different pairs are oriented at different directions parallel to the base plane, preferably at orthogonal directions. Moreover, a gripping device (that is, at least one of them, but preferably each) may include two opposing elements each having gripping faces configured to clamp an extremity of said sheet-shaped specimen between them; and at least one of said gripping faces, at its end oriented toward the specimen, may taper into a rounded edge. The rounded edge may, seen in a section along a plane transverse to the plane of the sheet-shaped specimen, advantageously have a shape of an elliptic curve (i.e., portion of an ellipse).

In a particularly useful development of the invention, the cam disk device is removable from the base frame, which for instance allows mounting of different cam disk devices having different configurations of the radius varying as a function of the circumferential coordinate.

According to a further aspect of the invention, a method for applying strain, or more generally displacement, to a sheet-shaped specimen in at least two directions is provided. The method according to this further aspect of the invention comprises the steps of
providing a base frame including a plurality of gripping devices moveably attached to said base frame according to a generally circular arrangement oriented parallel to a base plane of the base frame and surrounding a center space, wherein the plurality of gripping devices is movable radially with respect to a conceptual center location within the center space,
mounting a cam disk device to the base frame, the cam disk device having a planar, generally circular shape comprising a loading opening at a center thereof, such that the cam disk device is supported rotatable in a plane parallel to the base plane around the center location and oriented parallel to the base plane of the base frame,
arranging coupling elements of the gripping devices to abut a corresponding portion of the circumferential rim of the cam disk device, whose radius as measured with respect to said center is varying as a function of the circumferential coordinate around said center in at least a plurality of portions of the circumferential rim, such that the gripping device is radially coupled to the radius of the circumferential rim portion at the location of the respective coupling element, and
rotating the cam disk device in order to exert a strain on a specimen which has been positioned within the center space and has been clamped using said gripping devices, through the gripping devices.

Thus, the invention provides a compact system and method for applying biaxial displacement, such as equi-biaxial and uniaxial strain, to foils (metallic, polymer, or reinforced compounds), e.g. in order to measure failure or reliability of the (thin) sheet itself or coatings/thin films deposited onto the sheet. The system may be driven manually or with a motor, and it may be positioned at different orientations depending on if it is mounted under an optical light microscope, confocal laser scanning microscope, atomic force microscope, inside a scanning electron microscope (vacuum environment) or on the goniometer of an X-ray diffractometer (lab or synchrotron X-ray source).

### Short Description of the Drawings

In the following, in order to further demonstrate the present invention, illustrative and non-restrictive embodiments are discussed, as shown in the drawings, which show:
- Fig. 1: shows a displacement-applying system according to one embodiment of the invention, in several views, namely, a plan view (Fig. 1a), a lateral view (Fig. 1b), a perspective view (Fig. 1c), and a sectional view (Fig.1d);
- Fig. 2: depicts a perspective view of the base frame of the system of Fig. 1 after removal of the loading ring and top ring;
- Fig. 3: is an exploded view of the system of Fig. 1;
- Fig. 4: is an exploded view of the base frame of Fig. 2;
- Fig. 5: shows the loading ring in a plan view (Fig. 5a), two lateral views (Figs. 5b and 5c), and a perspective view (Fig. 5d);
- Fig. 6: is an exploded view of the loading ring of Fig. 5;
- Fig. 7: illustrates several embodiments of the loading ring having respectively different configurations of the circumferential rim;
- Fig. 8: depicts a typical sample shape of a specimen laded in the system according to the invention;
- Fig. 9: shows one of the gripping devices in several views, namely, a lateral view (Fig. 9a), a front view (Fig. 9b), a plan view (Fig. 9c), and a sectional view (Fig. 9d);
- Fig. 10: is a detail sectional view of the front gripping edge of the gripping device of Fig. 9d;
- Fig. 11: is an exploded view of the gripping device of Fig. 9; and
- Fig. 12: shows another embodiment of the displacement-applying system for manual operation, namely, in a plan view (Fig. 12a), a lateral view (Fig. 12b), and a perspective view (Fig. 12c).

### Detailed Description of Embodiments

In the exemplary embodiments of the invention explained below, basic concepts and further advantageous developments of the invention are explained. It will be evident to the person skilled in the art to freely combine several or all of the embodiments discussed here as deemed suitable for a specific application of the invention. Throughout this disclosure, terms like "advantageous", "exemplary", "typical", or "preferred" indicate elements or dimensions which are particularly suitable (but not essential) to the invention or an embodiment thereof, and may be modified wherever deemed suitable by the skilled person, except where expressly required. It will be appreciated that the invention is not restricted to the following embodiments or the particular layout of the displacement-applying system and method, which merely represent one of the possible applications of the invention, and are given for illustrative purpose and merely present suitable implementations of the invention. Within this disclosure, terms relating to orientations in space, such as "vertical", "horizontal", "top", "upper", "bottom", or the like, are to be understood with regard to a position where the base frame is oriented "horizontal", i.e., its base plane is horizontal and the cam disk device is rotatable around a "vertical" axis. However, it is to be noted that such "horizontal" orientation, while it is considered a typical orientation and therefore lends itself for purposes of notation of direction, is only one possible orientation, and the displacement-applying system may be oriented differently as needed for a specific use of application, for instance along a "vertical" plane or inclined.

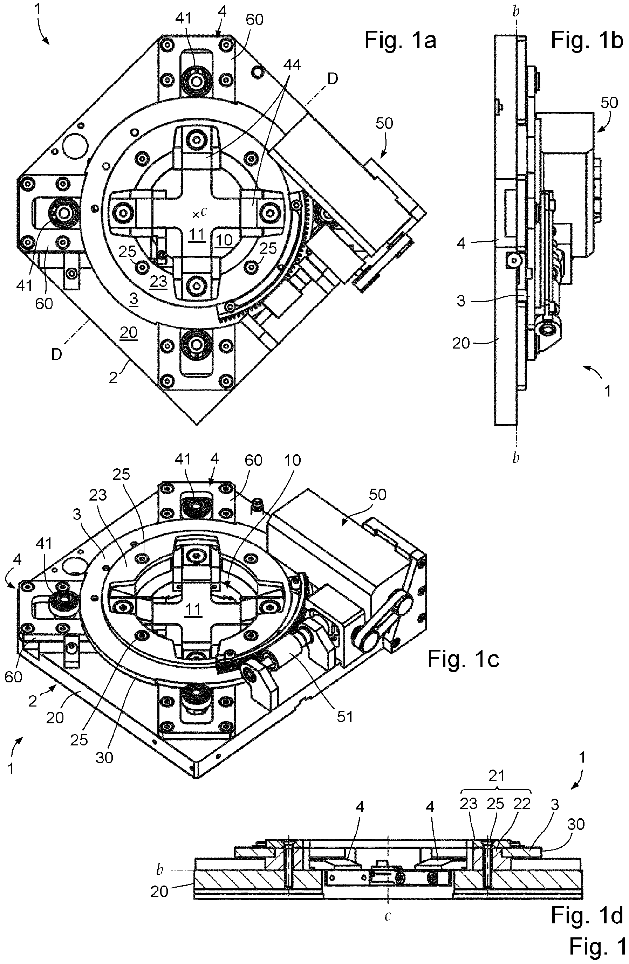

Referring to Fig. 1, a displacement-applying system 1 is illustrated, also referred to as "loading system" or simply "system"; wherein Fig. 1a represents a plan view, Fig. 1b a lateral view, Fig. 1c a perspective view, and Fig. 1d represents a sectional view at plane D-D of Fig.1a. The system 1 includes a base frame 2 and a loading ring 3, which is mounted rotatable on the base frame 2 and preferably removable therefrom.

The base frame 2 includes a base plate 20, on which its other components are mounted. The base plate 20 also defines a base plane *b* (see Fig. 1b; the base plane *b* is assumed to coincide with a "horizontal" plane in the orientation shown in Fig. 1 without restriction to the invention). The loading ring 3 realizes the cam disk device of the invention in this embodiment and is operatively mounted on the base frame 2 such that it is rotatable within a plane parallel to the base plane *b* around center axis *c* (evidently, center axis *c* extends orthogonal to the base plane *b*)*.*

The loading ring 3 is supported and guided on the base frame 2 by means of a support assembly 21 (Fig. 1d) fixedly attached to the base plate 20. The support assembly 21 includes a number of support elements 22, for instance realized as four support ring elements made from bronze in the embodiment shown, arranged uniformly around the center axis c, as well as a removable top ring 23.

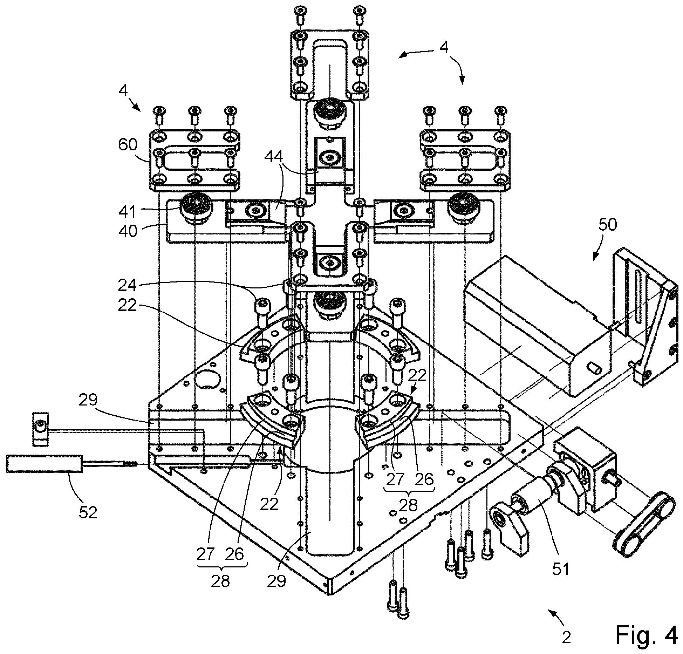

Gripping devices 4 are provided, for instance four of them, each of which includes a clamping part 44 where one end of the sample 11 is fixed. Each gripping device is located in a respective groove 29 (see Fig. 4) formed in the base plate, which is configured to restrict the motion of the respective gripping device to the radial direction. Each gripping device 4 comprises a coupling element 41 which is configured to contact the outward rim (circumferential rim 30) of the loading ring 33; by virtue of the gripping device 4 being radially coupled to the outward radius of the loading rim at the location of the respective coupling element, the radial position of the gripping device 4 is defined. Each gripping device 4 is held in its respective groove 29 by means of a fixture component 60, which has a suitable shape such as a C-shape and is fixed to the base plate 20, thus forming a sliding bearing for the base part 40 of the gripping device (which may be lubricated using e.g. a suitable vacuum grease), which is held moveable between the base plate 20 and the fixture component 60 along the respective radial direction as defined by the respective groove 29.

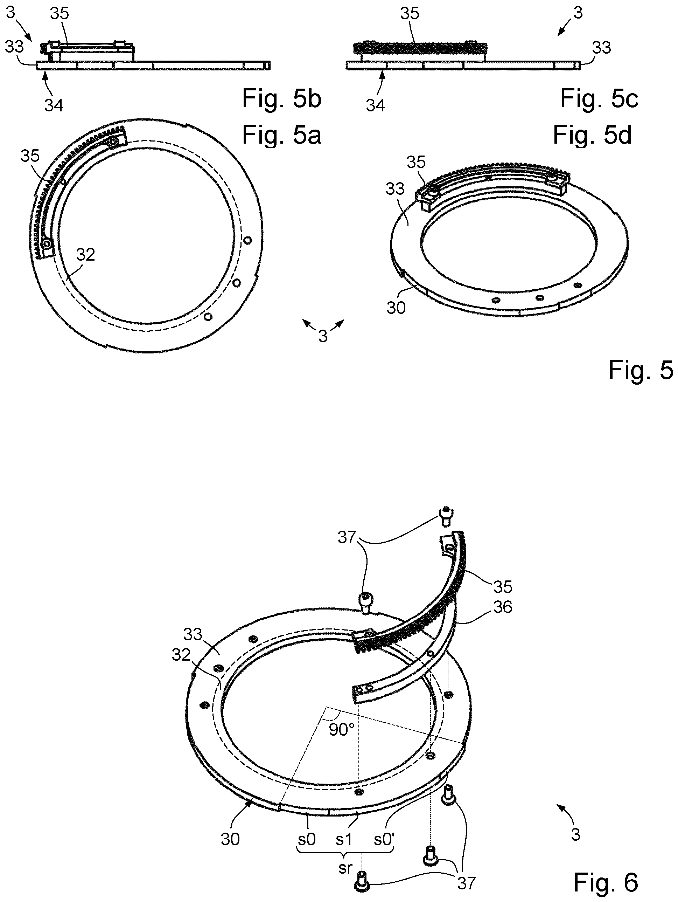

The radially outward rim of the loading ring 3 is shaped as a circumferential rim 30 having a number of portions (or rim sectors) having varying radius, as described in more detail below referring to Fig. 5. By rotating the loading ring 3 around the center axis c in a rotation direction corresponding to clockwise direction in Fig. 1a, the circumferential rim 30 pushes the coupling elements 41 according to its increasing radius, thus moving the gripping devices 4 radially outwards. This exerts a corresponding displacement (i.e., usually, strain) upon the sample 11 mounted in the system. Conversely, for reducing the strain / displacement, the loading ring 3 is allowed to rotate in the opposite direction (i.e., counter-clockwise in Fig. 1a), and the sample will contract to reduced strain state in accordance with the current radius of the circumferential rim 30 at the coupling elements 41. In variant embodiments, additional elastic elements (not shown) may be provided in order to bias the gripping devices outwards and/or inwards along their respective radial direction.

The components of the loading system 1 are, where not indicated otherwise hereinafter, made from a suitable material having high mechanical stability and good vacuum-compatibility, such as stainless steel, aluminum, or the like. This ensures that the loading system 1 can be operated in a wide range of experimental parameters, including temperatures in a range from 0°C to 400°C or higher.

The base plate 2 is preferably provided with a central window corresponding with the center space 10, so the sample 11 is freely accessible from either side (from "above" and "below" ). For heating or cooling purposes, heating and/or cooling elements may be provided, inserted in respective recesses of the bottom side of the base plate (not shown).

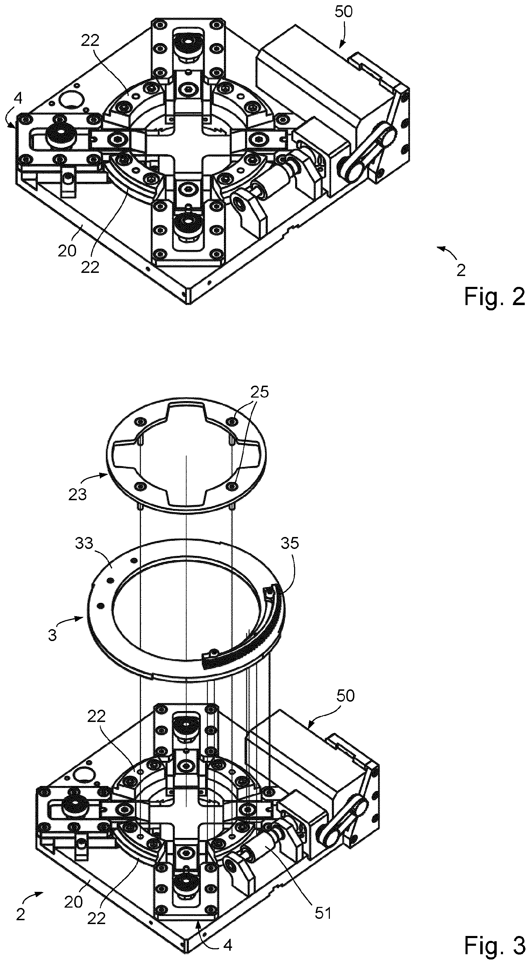

Fig. 2 shows the base frame 2 in a perspective view (like Fig. 1c), where the loading ring 3 and the top ring 23 are removed. Fig. 3 is an exploded view showing the relation of the base frame 2, loading ring 3, and top ring 23, and Fig. 4 is an exploded view of the base frame 2 (without top ring 23), showing the components thereof.

The support elements 22 belonging to the support assembly 21 are mounted to the base plate 20 by means of suitable fastening elements 24 such as threaded bolts or hexagon socket screws. Similarly, the top ring 23 is attached to the base plate 20 by means of suitable fastening elements 25 (each in the free space between two support elements respectively) such as countersunk screws.

In order to mount the loading ring 3, it is placed onto the base frame 2 (assembled as shown in Fig. 3), more exactly onto the supporting elements 22, and then the top ring 23 is placed on top of the loading ring 3 and is fixed using the fastening elements 25. Thus, the loading ring 3 is fixed with respect to the direction transversal to the base plane *b* at a defined position while still being rotatable around the center axis c. Conversely, for unmounting the loading ring 3, the fastening elements 25 are detached, allowing to remove the top ring 23, which in turn enables removing the loading ring 3 from the supporting elements 22.

The loading ring 3 is made of a material of high mechanical stability and good vacuum compatibility, such as non-magnetic stainless steel, which has a high modulus of elasticity, and has the overall shape of a ring, designed for being mounted centered with respect to the center axis c of the base frame 2 and rotatable around this center axis c. The loading ring 3 surrounds an opening 31 which is preferably formed as a circular opening of a diameter sufficiently wide to allow easy access to a sample mounted in the system 1, and preferably also to at least the innermost portions of the gripping devices (see below).

The "top" side of the loading ring (i.e., the side facing away from the base frame 2) comprises, at its radially inner portion, a surface area portion 32 (see Fig. 6), which realizes a planar ring surface onto which the top ring 23 is mounted as described above. The outward rim, shaped to form a circumferential rim 30 having varying radius is described in more detail below with reference to Fig. 5.

The "bottom" surface of the loading ring 3 (i.e., its surface facing the base frame 2) is realized as a planar support surface 34, which is destined to cooperate with a matching support surface 28 of the base frame 2, thus forming a slide contact bearing. To this end, each support elements 22 has at its respective "top" portion (i.e., the portion oriented away from the base frame 2) a stepped shape at its outward rim, in that the support element 22 is provided with a "horizontal" surface 26 extending parallel to the base plane *b,* e.g. having the shape of a circular ring sector, as well as a "vertical" surface 27 which, e.g. formed as a sector cylindrical surface, extends upwards from the inner edge of the surface 26. The surface 26 serves as element support surface facing the loading ring which is positioned on the support elements 22; collectively, the element support surfaces 26 of the support elements 22 are coplanar and form a composite surface that realizes the matching support surface 28 of the base frame 2. The surfaces 27 (which represent portions of the same cylindrical surface parallel to the center axis c) cooperate with the inner rim of the loading ring 3 so as to hold the latter in a well-defined position centered with respect to the center axis c of the system 1. This establishes a clearance-free slide contact bearing between the loading ring 3 and the support elements 22 made of bronze, and ensures a high-precision alignment of the loading ring 3 with respect to center axis c. (Furthermore a suitable lubrication may be provided if needed, e.g. using a suitable vacuum grease.) This ensures that the center of a sample mounted into the system 1 is held and maintained at a constant position, which is used, e.g., as field of view of the microscopes or other measurement devices during a straining experiment, which enables *in operando* testing.

The top ring 23 is made of aluminium or any other suitable material having sufficient mechanical stability and, preferably, vacuum suitability.

It will be evident that also many other ways for ensuring a precise alignment of the loading ring around the center axis are possible and can be implemented by a skilled person, such as a combination of a radial groove cooperating with corresponding projections or pins, or the like.

The fastening elements 24 of the support elements 22 are located, for instance, radially within the cylindrical surfaces 27; in a variant they could be located outwardly, for instance in recessed portions outward of or in the portion of the elements 22 that bears the planar surface 26.

Figs. 5 and 6 illustrate the loading ring adapted for being used in the system of Figs. 1-4. Specifically, Fig. 5 shows the loading ring 3 in a plan view (Fig. 5a), two lateral views (Figs. 5b and 5c), and a perspective view (Fig. 5d), and Fig. 6 is an exploded view of the components of the loading ring 3. The body 33 of the top ring has, at its upper surface, the surface area portion 32 mentioned above, which realizes a planar ring surface onto which the top ring 23 can be mounted as described above. Also referring to Fig. 6, the "top" side may further be provided with additional components for adjusting a specific angular position, such as a worm gear rim 35 shaped as a ring section and mounted onto the top ring body 33 radially outwards of the surface area portion 32, by means of suitable fastening devices 37 (such as hexagon socket screws); an intermediate adapter component 36 may serve to provide a suitable height of the gear rim 35 above the top surface of the loading ring 3.

For instance, in a specific embodiment of the loading ring, the inner diameter of the opening is 120 mm; the outer diameter (measured across a direction corresponding to zero strain) is 162 mm. The radial extension of the surface area portion 32 is a few millimeters (e.g. 3 mm).

The loading system 1 of the embodiment shown includes a step motor system 50 for rotation and polar angle position adjustment of the loading ring 3. A worm gear 51 of a step motor system 50 (see Figs. 1a and 1c) engages the gear rim 35. This enables the step motor system to define a desired polar angle state of the loading ring 3 mounted on the system 1. The screw gear formed by the cooperation gear rim 35 and worm gear 51 serves to determine and maintain the rotation angle of the loading ring, thus fixing the state of displacement and/or strain of the specimen 11. Thus, once the rotation angle of the tool is fixed by the screw gear, the system 1 with a specimen 11 mounted therein can be transferred between several external measurement devices for ex-situ characterization, while keeping the specimen 11 in a well-defined state of a straining (or displacement applying) experiment. The screw gear offers the additional advantage of self-locking property of the polar angle positioning. The step motor system is located, e.g., above the base plate outside of the loading ring arrangement; it is evident, however, that any other suitable position may be chosen, in particular at either side of the loading ring (this may necessitate an appropriate gearing mechanism and/or suitable repositioning of the gear rim as well). In a variant, for example with certain vacuum applications, the motor may be located below the base plate (not shown).

To improve the control of the displacement or strain applied, the displacement may be measured by a separate device. For instance, an inductive displacement transducer 52, which is connected to one of the gripping devices 4, for instance at the side of its base part 40, may be provided in the base frame 2. The strain that is applied upon the sample is detected by the transducer 52 and output as sensor reading for the displacement of the gripping device along the respective radial direction, for equi-biaxial loading (tool ratio of 1:1) and the grip to grip separation of 60 mm for both axis in the initial position. If non-equi-biaxial loading is performed (i.e. tool ratio of 1:5) a simple calculation can be performed to determine the displacement in all directions; as an alternative, a second (or additionally a third) transducer and output sensor for reading the displacement of the additional gripping direction may be used. Alternative strain measurement procedures, such as digital image correlation, may be used as well; these can easily be achieved since the top and bottom surfaces of the sample center are not covered by any part of the device. Thus, it is possible to track the strain of the sample by a camera system, e.g. located below the sample, while microscope measurements (e.g. the crack initiation in a film or coating) can be done simultaneously from the top side.

As also visible in Fig. 5, the outward face of the loading ring 3 is shaped as a circumferential rim 30 with varying radius along the circumferential (in particular, polar angle) coordinate. In particular, in the embodiment shown the circumferential rim 30 comprises four portions, also referred to as rim sectors. These rim sectors are configured to cooperate the coupling elements 41 of the gripping devices 4 (see Fig. 1) respectively. Each rim sector comprises a portion where the radius increases as a (e.g. linear) function of the angle, as described in more detail below. Preferably, the respective two portions that are located diametrically opposite to each other have identical shape (i.e., are identical when the ring is turned by 180°); this will ensure that the sample center is maintained during a deformation procedure. Preferably, the number of rim sectors corresponds to the number of gripping devices present in the base frame.

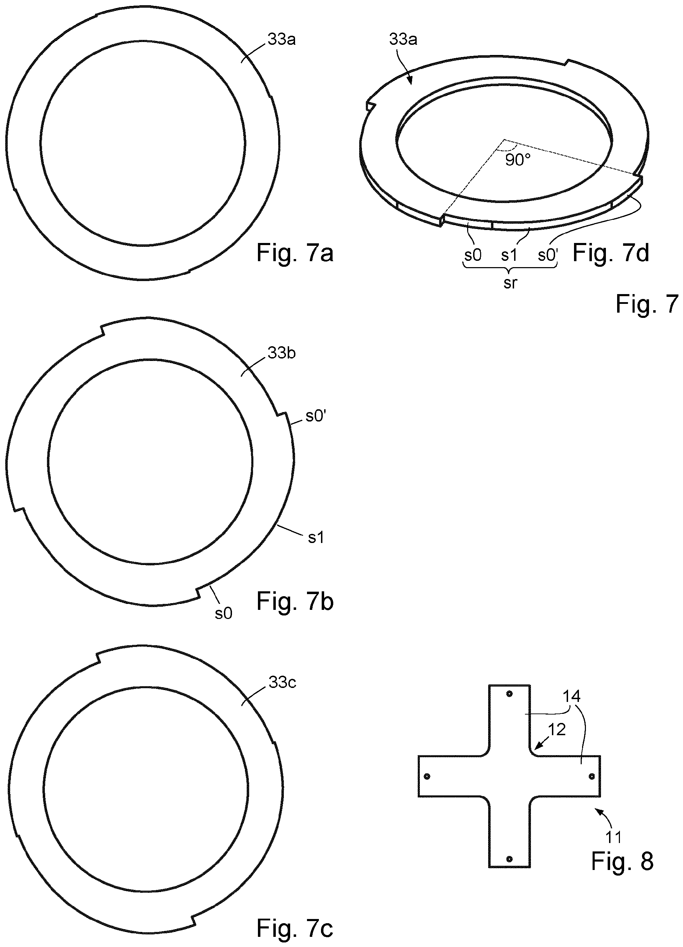

Fig. 7 illustrates several embodiments of the loading ring (only the respective loading ring body 33a-33c is shown) having respectively different configurations of the circumferential rim. Fig. 7a shows one embodiment 33a having four rim portions of mutually identical angular slopes; the radius variation corresponds to a 2.5% increase with respect to the starting radius, corresponding to a final strain of 2.5%. Fig. 7b shows another embodiment 33b having four rim portions of identical slopes, where the radius variation corresponds to a 1/6 increase with respect to the starting radius. Fig. 7c shows yet another embodiment 33c, which comprises rim portions of different sloping; more specifically, the diametrically opposing rim portions are identical, but the two pairs of rim portions (offset by 90°) have slopes realizing a slope ratio of 1:5, i.e., the "light" rim portion slope realizes a radius variation which is a factor of 1/5 of the "strong" rim portion slope. In other words, the slopes correspond to final strains of 3.333% and 16.667% respectively along the two directions. A loading ring of the type shown in Fig. 7c can be used to implement a displacement according to non-isotropic strain; in the example shown, non-isotropic strain where the strain is at a constant ratio of 1:5. Of course, other values of the ratio may be used as may be desirable.

Referring to Fig. 7d, which shows a perspective view of the loading ring embodiment of Fig. 7b, at one end or both ends of each increasing portion there may preferably be provided a small region where the radius is not varying, for instance regions s0, s0' at either side of the angular slope range s1 of the rim portion sr of Fig. 7d. The rim portion sr of the embodiment shown covers an angular range of 90°; but in other embodiments the angular range of a rim portion may be chosen differently depending on the specific application. For instance, the angular slope may be realized within slope range s1 having an angular width ϕ₁ that is somewhat smaller than the respective sector of the rim portion; thus ϕ₁ < 90° (or more generally, ϕ₁<360°/n where n is the number of rim portions arranged around the circumferential rim). The surrounding initial and final regions s0, s0' have constant radiuses r₀ and *r*₁= *r*₀+kϕ₁ [or more generally, *r*1=f(ϕ₁)], respectively, and have angular widths of only a few degrees. The angle-radius relation in the slope range s1 is typically linear (i.e., according to *r* = *r*₀ + *k*ϕ*,* with constant angular slope *k,* the angle ϕ varying between 0 and ϕ₁), but in variants it may be any suitable shape (i.e., *r* = f(ϕ)) such as a sigmoidal curve or with increasing angular slope.

Fig. 8 depicts a typical sample shape of a specimen 11 suitable for being loaded into the system according to the invention.

The sample shown in Fig. 8 is cut to a cross-like shape having four arms 14 arranged at angles of 90° to each other. Each arm 14 is along one main direction, and its end is designated for being held in a respective one of the gripping devices, by clamping the distal portion. The small circles in Fig. 8 depict the location 13 of a fixing pin of the respective gripping device; if desired, small holes (e.g. of circular shape) may be formed at this fixing pin location 13. The corner 12 between neighboring arms is preferably rounded, which helps preventing that the sample tears at the corner.

One approach for manufacturing the cross-shape of the sample is by cutting to the necessary shape using a blade, laser, or other commonly used cutting device. In order to cut to the desired shape, a physical template may be used, or a pattern created using a computer program (computer-aided design) is employed. For instance, for obtaining polymer foils of a thickness of 25 µm to 125 µm (located on a carrier foil of about 0.13 mm thickness), a Cricut Explorer (commercially available machine) was used. Metal foils could be cut with a laser cutting tool to avoid artifacts that could influence the results.

In a specific example the dimensions of the sample are, for instance, 90 mm length of the sample cross shape while opposite tip locations (dots in Fig. 8) are at a distance of 82 mm distance; the width of each arm 14 is 20 mm and the radius of the rounded corner 12 is about 5 mm. The small holes at the fixing pin locations 13 are a few mm wide, e.g. 4 mm diameter. The thickness of the sample 11 that is held in the system 1 may vary, but typically it is in the order of a few microns up to tenths of millimeters. It will be evident, however, that the dimensions of the sample is variable, and may be chosen as will be suitable for a respective application or experiment, also with regard to dimension of a specific experimental setup (such as an electron microscope or a camera system) in which the loading system and the sample mounted therein is to be examined.

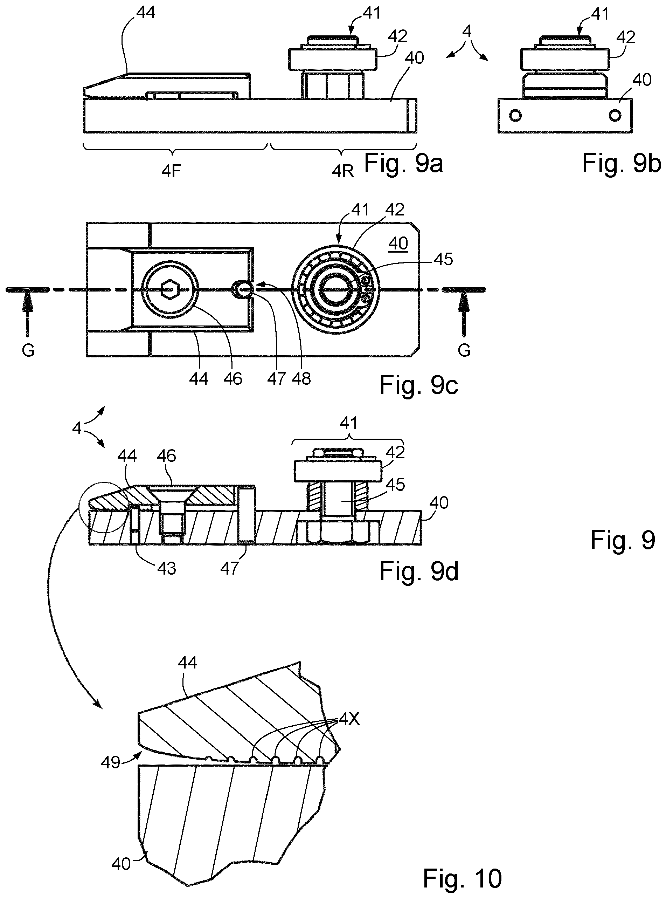

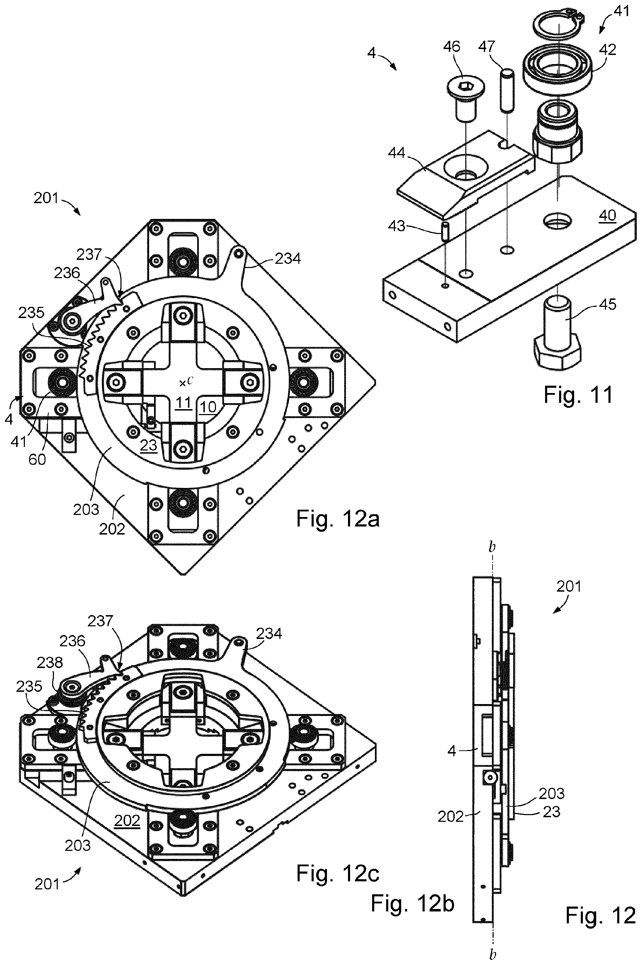

Fig. 9 illustrates one of the gripping devices 4 of the system 1 in several views, wherein Fig. 9a represents a lateral view of the gripping device, Fig. 9b a front view (along a direction corresponding to a radial direction outwards), Fig. 9c a plan view, and Fig. 9d represents a sectional view according to a vertical section plane G-G of Fig. 9c. Fig. 10 is a detail sectional view of the front tip of the gripping device 4. Furthermore, an exploded view of the gripping device of Fig. 9 is shown in Fig. 11.

The gripping device 4 comprises a body part 40 having a rear portion 4R, which when mounted in the system 1 is oriented radially outwards and located outside of the circumferential rim 30 of the loading ring 3, and a front portion 4F, which when mounted in the system 1 is oriented towards the center axis c and the sample 11 mounted in the center space 10. In fact, it is the very front tip of the gripping device which is used to clamp and hold the end of a respective arm 14 of the sample 11.

The base part 40 is, on its rear portion 4R, provided with a coupling element 41, which preferably is realized as a rotatable wheel-like element such as a ball bearing 42 mounted on a shaft 45 (suitably extending parallel to center axis c) such that its outer part is rotatable around the shaft. In the mounted state the outer part of the ball bearing 42 of the coupling element 41 is in contact with a corresponding rim portion of the circumferential rim 30 of the loading ring 3, i.e., the circumferential rim 30, and is pressed radially inwards by virtue of the reaction force of the sample or a suitable spring element (not shown).

On the front portion 4F of the base part a clamping part 44 is attached, which serves to grip and hold one end of a sample arm 14. The clamping part 44 is fixed to the base part 40 by means of, e.g., a fixing screw 46 having a conical head. A fixing pin 43 may be provided forward of the fixing screw, which traverses the sample held between clamping part 44 and base part 40. In order to improve the alignment of the clamping part 44 with the longitudinal axis of the clamping device (which in the mounted state will coincide with a radial direction with respect to center axis c), the rear end of the clamping part may be provided with a central recess 48 cooperating with a centering pin 47 inserted in to the base part 40.

Referring to Fig. 10, at least one of the gripping faces of the clamping part 44 and base part 40 may be formed tapering off, in order to reduce the risk of sample failure at the sample grip location. If a sample fails at the grip location, it is considered invalid and must be replaced. This risk can be reduced drastically by having at least one of said gripping faces 49, at its end oriented toward the specimen, shaped tapering into a rounded edge. Preferably the shaping of the face 49, as seen in the sectional view as in Figs. 9 and 10, is according to an elliptic curve. This will minimize the stress concentration at the sample grip location caused by the clamping force at the grip tips. This design detail importantly reduces the risk of sample failure at the sample grip location.

For improved clamping of the samples, a corrugated contact surface of a grip surface 49 may be provided, for instance by machining corrugation lines 4X in orthogonal orientation to the sliding axis. For accurate sample positioning, the sample arms may be provided, as mentioned, with holes 13 at a well-defined distance to the sample centre. Through these holes 13 the fixing pins 43 are inserted, thus ensuring proper alignment of the sample axis with the slide axis of the gripping device 4. The fixing pins and holes and are not used for the application of tensile force to the sample during the test; rather, the tensile force is only transmitted by the sample grips through the gripping faces 49, embossed by the fixing screw 46.

Referring to Fig. 12 another embodiment of the displacement-applying system 201 is configured for manual operation. Fig. 12a represents a plan view of the system 201, Fig. 12b a lateral view thereof, and Fig. 12c is a perspective view. Strain can be applied by rotating the loading ring 203 in a rotation direction corresponding clockwise direction in Fig. 12a, by manual action using for instance a handle 234 which protrudes from the loading ring 203, e.g. in a radial direction from the circumferential rim of the top ring or (in a variant not shown) from the upper surface of its body. The loading ring 203 of this embodiment is provided with a serrated crest element 235, which has a general ring-sector shape and has a serration at its outward side. A ratchet arm 236, mounted on the base plate 202 of the system 202, is biased against the serration of the crest element 235 by means of a spring 238 or other elastic element; the tip 237 of the ratchet arm 236 blocks a movement of the loading ring in a rotation direction (counter-clockwise in Fig. 12a) that would correspond to reducing strain upon the sample, unless the ratchet arm 236 is lifted from the crest element by manual intervention in order to reset the displacement. In other respects, in particular as regards the gripping devices 4 and their interaction with the loading ring and its circumferential rim, the same considerations apply as with the embodiment of Figs. 1-4.

The displacement-applying system according to the invention, as illustrated in the above exemplary embodiments, is particularly useful for straining thin sheet-shaped specimen, such as thin foils made of polymer or metal. By virtue of the displacement-applying system 1 the invention enables testing metal and ceramic coatings or thin films under a well-defined biaxial loading. The coatings or films may also be generated by applying the coating or film on the support material using well-known physical vapor deposition (PVD) methods, such as sputtering and evaporation, or chemical vapor deposition (CVD) methods, such as reactive sputtering or atomic layer deposition methods.

Through replacing one single part, namely the loading ring (cam disk device), different loading ratios for the different directions can be achieved, such as 1:1, 1:2, 1:5, for the x and y directions in a two-axis setup. The gripping method is also optimized to reduce fracture at the grips and perfect alignment of the cruciform (cross) sample shape. The novel design of the loading ring allows for elevated temperature measurements with the addition of a heat source under the sample, in-situ strain measurements with a camera under or above the sample, or the addition of electrical probes to measure the electrical resistance of metallic foils or films during straining. The invention also allows for the transmission of X-rays through a sufficiently thin or X-ray transparent material (thin polymer/plastic foil or thin sheet).

### LIST OF REFERENCE SYMBOLS

- 1: loading system
- *b*: base plane
- *c*: center axis
- 10: center space
- 11: specimen
- 12: corner
- 13: fixing pin locations
- 14: arms of specimen
- 2: base frame
- 20: base plate
- 21: support assembly
- 22: support element(s)
- 23: top ring
- 24: fastening element(s) (of support element)
- 25: fastening element(s) (of top ring)
- 26: "horizontal" surface / element support surfaces
- 27: "vertical" surface
- 28: matching support surface
- 29: groove (for gripping device)
- 3: loading ring
- 30: circumferential rim
- 31: opening of loading ring
- 32: surface area portion
- 33: loading ring body
- 33a, 33b ,33c: loading ring body variants
- 34: planar support surface
- 35: gear rim
- 36: adapter component
- 37: fastening element(s) of gear rim
- sr: rim portion
- s1: angular slope range
- s0, s0': small regions of constant radius
- 4: gripping device
- 40: base part
- 41: coupling element
- 42: ball bearing /wheel-like element
- 43: fixing pin
- 44: clamping part
- 45: shaft (for mounting coupling element wheel 41)
- 46: fixing screw
- 47: centering pin
- 48: recess
- 49: gripping face (tapering)
- 4X: corrugation lines
- 4F: front portion of gripping element
- 4R: rear portion of gripping element
- 50: step motor system
- 51: worm gear
- 52: displacement transducer
- 60: fixture component
- 201: manually operated system
- 202: base plate of 201
- 203: loading ring of 201
- 234: handle
- 235: crest element
- 236: ratchet arm
- 237: tip of ratchet arm
- 238: spring

## Claims

1. A system (1, 201) for applying displacement to a sheet-shaped specimen (11) in at least two directions, the system comprising:
a base frame (2) including a plurality of gripping devices (4) moveably attached thereto, and
a cam disk device (3) mountable to the base frame (2),
wherein the plurality of gripping devices (4) are arranged in a generally circular arrangement oriented parallel to a base plane (*b*) of the base frame (2) and surrounding a center space (10), wherein the plurality of gripping devices are movable radially with respect to a conceptual center location within the center space and are configured to clamp said specimen located within the center space and exert a displacement on the specimen, wherein the cam disk device (3) has a planar, generally circular shape comprising a loading opening at a center thereof, said cam disk device comprising a circumferential rim (30) whose radius as measured with respect to said center is varying as a function of the circumferential coordinate around said center in at least a plurality of portions of the circumferential rim,
wherein said cam disk device (3), when mounted to the base frame (2), is supported rotatable in a plane parallel to the base plane (b) around the center location,
each gripping device (4) including a respective coupling element (41) configured to abut a corresponding portion of the circumferential rim (30) of the cam disk device, when the latter is mounted to the base frame, such that the gripping device is radially coupled to the radius of the circumferential rim portion (30) at the location of the respective coupling element.

2. The system of claim 1, wherein the loading opening of the cam disk device is realized as a central hole pervading the cam disk device.

3. The system of claim 2, wherein the base frame (2) comprises a central window at the center space, said central window corresponding with the central hole of the cam disk device when the latter is mounted to the base frame.

4. The system of any one of the preceding claims, wherein the cam disk device (3) is removable from the base frame (2), allowing mounting of different cam disk devices (33a, 33b, 33c) having different configurations of the radius varying as a function of the circumferential coordinate.

5. The system of any one of the preceding claims, wherein the cam disk device (3) comprises a planar support surface (34) located within the circumferential rim, the planar support surface being configured to cooperate with a matching support surface (28) of the base frame (2) oriented parallel to the base plane (b) to provide a rotatable connection around the center space.

6. The system of any one of the preceding claims, wherein the plurality of gripping devices (4) is realized as two pairs of gripping devices, the two gripping devices of each pair being located at opposite positions with respect to the center space (10), and the pairs being oriented at different directions parallel to the base plane, preferably at orthogonal directions.

7. The system of any one of the preceding claims, wherein at least one, preferably each, of the gripping devices (4), includes two opposing elements each having gripping faces configured to clamp an extremity of said sheet-shaped specimen between them, wherein at least one of said gripping faces (49), at its end oriented toward the specimen, is tapering into a rounded edge, preferably according to an elliptic curve as seen in a section along a plane transverse to the plane of the sheet-shaped specimen.

8. A cam disk device (3, 203) configured to being used in a displacement applying system,
wherein the cam disk device (3) has a planar, generally circular shape comprising a loading opening at a center thereof, said cam disk device comprising a circumferential rim (30) whose radius as measured with respect to said center is varying as a function of the circumferential coordinate around said center in at least a plurality of portions of the circumferential rim.

9. The cam disk device of claim 8, wherein the loading opening of the cam disk device is realized as a central hole pervading the cam disk device.

10. The cam disk device of claim 8 or 9, comprising a planar support surface (34) located within the circumferential rim (30), the planar support surface being configured to cooperate with a matching support surface (28) of the displacement applying system in which the cam disk device is to be mounted rotatable within the plane of the support surface about the loading opening.

11. A method for applying displacement to a sheet-shaped specimen (11) in at least two directions, the method comprising
providing a base frame (2) including a plurality of gripping devices (4) moveably attached to said base frame according to a generally circular arrangement oriented parallel to a base plane of the base frame and surrounding a center space, wherein the plurality of gripping devices are movable radially with respect to a conceptual center location within the center space,
mounting a cam disk device (3) to the base frame (2), the cam disk device having a planar, generally circular shape comprising a loading opening at a center thereof, such that the cam disk device is supported rotatable in a plane parallel to the base plane around the center location and oriented parallel to the base plane of the base frame,
arranging coupling elements (41) of the gripping devices (4) to abut a corresponding portion of the circumferential rim (30) of the cam disk device, whose radius as measured with respect to said center is varying as a function of the circumferential coordinate around said center in at least a plurality of portions of the circumferential rim, such that the gripping device is radially coupled to the radius of the circumferential rim portion at the location of the respective coupling element, and
rotating the cam disk device (3) in order to exert a strain on a specimen (11) which has been positioned within the center space and has been clamped using said gripping devices, through the gripping devices.
